# EUROPÄISCHE PATENTSCHRIFT

(11) **EP 2 304 205 B1**
(45) Veröffentlichungstag und Bekanntmachung des Hinweises auf die Patenterteilung: **14.08.2013**
(21) Anmeldenummer: 09761553.8
(22) Anmeldetag: 30.04.2009
(51) Int. Cl.: F02C 7/22, F02C 7/232, F01D 25/00

(54) **VERFAHREN ZUM SPÜLEN EINES BRENNSTOFFSYSTEMS EINER GASTURBINE UND ZUGEHÖRIGES BRENNSTOFFSYSTEM**
METHOD FOR RINSING A FUEL SYSTEM OF A GAS TURBINE AND ASSOCIATED FUEL SYSTEM
PROCÉDÉ DE RINÇAGE D'UN SYSTÈME D'ALIMENTATION EN COMBUSTIBLE D'UNE TURBINE À GAZ ET SYSTÈME D'ALIMENTATION EN COMBUSTIBLE ASSOCIÉ

(30) Priorität: 09.06.2008 DE 102008027409
(43) Veröffentlichungstag der Anmeldung: 06.04.2011
(73) Patentinhaber: Siemens Aktiengesellschaft, 80333 München (DE)
(72) Erfinder: WAGNER, Ulrich, 51766 Engelskirchen (DE); BASSMANN, Carsten, 41466 Neuss (DE); RAUH, Horst Uwe, 45309 Essen (DE); ERTLE, Volker, 45529 Hattingen (DE); NIENHAUS, Michael, 46325 Borken (DE); RAZOWSKI, Damian, 45473 Mülheim (DE); SCHEUER, Uwe, 45475 Mülheim (DE)
(86) Internationale Anmeldenummer: PCT/EP2009/055266
(87) Internationale Veröffentlichungsnummer: WO 2009/149990

(56) Entgegenhaltungen:
- US-A- 4 041 695
- US-A- 5 784 875
- US-A1- 2002 026 784
- US-A1- 2007 289 308

## Beschreibung

Die Erfindung betrifft ein Verfahren zum Spülen eines Abschnitts eines Brennstoffsystems eines Brenners einer Gasturbine mit den Schritten: Vorsehen einer Zuführungsleitung zum Zuführen von Brennstoff von einer Brennstoffquelle zu dem Brenner und Abführen bzw. Ausspülen des in der Zuführungsleitung befindlichen Brennstoffs. Ferner betrifft die Erfindung ein Brennstoffsystem eines Brenners einer Gasturbine mit einer Zuführungsleitung zum Zuführen von Brennstoff von einer Brennstoffquelle zu dem Brenner und einem Einspeisepunkt zum Einspeisen von Medium in die Zuführungsleitung.

Bei Gasturbinen mit Heizöl-Betrieb muss das Heizöl bzw. der flüssige Brennstoff nach dem Betrieb aus den Brennern und den daran angeschlossenen Versorgungsrohrleitungen entfernt werden, um ein Verkoken des Heizöls an deren heißen Oberflächen zu verhindern. Das Verkoken würde Leitungen und Brenner verstopfen und somit unbrauchbar machen.

Aus EP 0 939 220 A1 ist ein Verfahren bekannt, bei dem die Brenner und Versorgungsleitungen von Gasturbinen gespült werden, um damit das Heizöl aus den Leitungen bzw. aus dem Brenner zu entfernen. Das bekannte Entleeren der Heizölleitungen geschieht in zwei Schritten: Zunächst werden die Brenner gespült. Dazu wird Wasser über eine Wasserleitung einer NOx-Wasserversorgung (welche für den Heizöl/Wasser-Emulsionsbetrieb ohnehin vorhanden ist) über ein brennernahes T-Stück in die brennernahe Heizölleitung und anschließend in die Brennkammer gedrückt. Dadurch werden der Brenner und das Leitungsstück zwischen brennernahem T-Stück und Brenner von Heizöl entleert. In einem zweiten Schritt wird das Wasser der NOx-Wasserversorgung weiterhin über das brennernahe T-Stück in die Heizölleitung gedrückt. Von dort drückt es das in der Heizölleitung befindliche Heizöl rückwärts in Richtung Heizölversorgung (Heizöl-Wassereinspritzpackage), von wo es über offene Ventile eines Mehrfunktionaventils in eine Entleerung verbracht wird. Bei dem derartigen Spülverfahren und dem zugehörigen Brennstoffsystem kann es bei bestimmten Betriebsbedingungen zum Verbleib von Rückständen in der Heizölleitung kommen.

Ferner ist aus der US 2002/0026784 A1 ein Spülsystem für die öl-Brennstoffleitung eines Gasturbinenbrenners bekannt. Dabei ist vorgesehen, dass über separate Leitungen Luft oder Wasser zum Spülen der Brennstoffleitung zugeführt werden kann. Die Spülung kann dabei nacheinander erfolgen oder auch gleichzeitig. Ein dazu analoges System für Gas-Brennstoffleitungen ist auch aus der US 5,784,875 bekannt.

Darüber hinaus offenbart die US 2007/0289309 A1 eine Brennstoffzuführungsleitung, bei der der darin vorhandene Brennstoff mit Hilfe eines invers angetriebenen Brennstoffverteilers aus der Brennstoffleitung zurückgesaugt werden kann. Anschließen wird dieser Brennstoff in ein Auffangbecken zurückgeführt. Weiter ist aus der US 4,041,695 bekannt, mehrere Ventile zu einem gemeinsamen Ventilblock zusammenzufassen.

Es ist eine Aufgabe der Erfindung ein Verfahren zum Spülen eines Abschnitts eines Brennstoffsystems eines Brenners einer Gasturbine sowie ein zugehöriges Brennstoffsystem zu schaffen, bei dem die oben genannten Nachteile überwinden und zugleich eine einfache und kostengünstige Art des Spülens möglich sind.

Die Aufgabe ist erfindungsgemäß mit einem Verfahren zum spülen eines Abschnitts eines Brennstoffsystems eines Brenners einer Gasturbine gemäß Anspruch 1 und einem Brennstoffsystem eines Brenners einer Gasturbine gemäß Anspruch 5 gelöst. Vorteilhafte Weiterbildungen der Erfindung sind in den abhängigen Ansprüchen beschrieben.

Gemäß der Erfindung ist ein Verfahren zum Spülen eines Abschnitts eines Brennstoffsystems eines Brenners einer Gasturbine mit folgenden Schritten geschaffen: Vorsehen einer Zu-Eührungeleitung zum Zuführen von Brennstoff von einer Brennstoffquelle zu dem Brenner, Vorsehen eines brennernaher Einspeisepunkts und eines brennerferner Einspeisepunkts in der Zuführungsleitung jeweils zum Einspeisen von Medium in die Zuführungsleitung, Einspeisen von Medium über den brennernahen Einsepeisepunkt und Abführen des in der Zuführungsleitung zwischen dem brennernahen Einspeisepunkt und dem Brenner befindlichen Brennstoffs über den Brenner sowie Einspeisen von Medium über den brennerfernen Einspeisepunkt und Abführen des in der Zuführungsleitung zwischen dem brennerfernen und dem brennernahen Einspeispunkt befindlichen Brennstoffs über den brennernahen Einspeisepunkt. Das derartige Verfahren ermöglicht ein einfaches, kostengünstigen und zugleich besonders gut reinigendes Spülen der Zuführungsleitung, insbesondere weil bei beiden Spülschritten der Brennstoff in Richtung des Brenners gefördert wird. Die Zuführungsleitung wird also in die gleichen Richtungen durchspült, wie auch der Brennstoff in ihr fließt. Dies hat, so haben Untersuchungen gezeigt, den Vorteil, dass z.B. konstruktiv zwingend vorzusehende Stöße und Verbindungsstellen in der Zuführungsleitung besser gereinigt werden.

Bei einer ersten vorteilhaften Weiterbildung des erfindungsgemäßen Verfahrens wird der Verfahrensschritt des Einspeisens von Medium über den brennerfernen Einspeisepunkt nach dem Verfahrensschritt des Einspeisens von Medium über den brennernahen Einspeisepunkt durchgeführt. Es wird mit dieser Weiterbildung weniger Brennstoff in den Brenner ausgetragen, als wenn die Verfahrensschritte in der anderen Reihenfolge durchlaufen werden.

Bei einer zweiten vorteilhaften Weiterbildung des erfindungsgemäßen Verfahrens wird der in der Zuführungsleitung zwischen dem brennerfernen und dem brennernahen Einspeisepunkt befindliche Brennstoff über den brennernahen Einspeispunkt in eine Drainageleitung abgeführt. Die Drainageleitung ermöglicht ein zielgerichtetes Entfernen und Entsorgen des abgeführten Brennstoffs.

Bei einer dritten vorteilhaften Weiterbildung des erfindungsgemäßen Verfahrens wird als Medium Wasser verwendet. Wasser ist bei Gasturbinen bereits in der dortigen NOx-Wasserversorgung vorhanden, mittels der im Betrieb der Gasturbine das Wasser in den Brenner eindosiert werden kann, um den Ausstoß von Stickoxiden zu verringern.

Ferner ist die Aufgabe gemäß der Erfindung mit einem Brennstoffsystem eines Brenners einer Gasturbine geschaffen, das mit einer Zuführungsleitung zum Zuführen von Brennstoff von einer Brennstoffquelle zu dem Brenner versehen ist, in der ein brennernaher Einspeisepunkt und ein brennerferner Einspeisepunkt jeweils zum Einspeisen von Medium in die Zuführungsleitung vorgesehen sind.

Bei einer ersten vorteilhaften Weiterbildung des erfindungsgemäßen Brennstoffsystems ist eine erste Einspeiseleitung zum brennernahen Einspeisepunkt geführt, eine zweite Einspeiseleitung zum brennerfernen Einspeisepunkte geführt und in den Einspeiseleitungen jeweils stromauf der beiden Einspeisepunkte ein Stellorgan zum Einstellen des Durchflusses zu den jeweiligen Einspeisepunkten vorgesehen. Die Stellorgane sperren während des normalen Betriebs des Brenners die Brennstoff-Zuführungsleitung gegenüber der Einspeisung von Fremdmedium ab.

Bei einer zweiten vorteilhaften Weiterbildung des erfindungsgemäßen Brennstoffsystems zweigt von der ersten Einspeiseleitung zwischen dem brennernahen Einspeisepunkt und dem stromauf davon angeordnetem Stellorgan eine Abführleitung (Drainage) mit einem darin angeordneten Stellorgan ab. Die Abführleitung leitet den ausgespülten Brennstoff gezielt ab und kann dazu während des zweiten Verfahrensschrittes mit dem genannten Stellorgan freigegeben werden.

Bei einer dritten vorteilhaften Weiterbildung des erfindungsgemäßen Brennstoffsystems ist in der Zuführungsleitung zwischen dem brennerfernen Einspeisepunkt und dem brennernahen Einspeisepunkt ein Stellorgan vorgesehen. Dieses Stellorgan dient zusätzlich zum Verschließen der Zuführungsleitung während des ersten Verfahrensschrittes, damit kein Brennstoff in die Brennstoffversorgung zurückgedrückt werden kann - wobei ebenfalls das erfindungsgemäß gerade vermiedene Rückwärtsströmen von Brennstoff in der Zuführungsleitung geschehen würde.

Bei einer vierten vorteilhaften Weiterbildung des erfindungsgemäßen Brennstoffsystems sind die genannten Stellorgane als Multifunktions-Stellorgan bzw. Multifunktionsventil zu einer baulichen Einheit zusammengefasst. Das derartige Multifunktions-Stellorgan kann als Einheit gefertigt und auch geprüft werden. Ferner ist es innerhalb des Brennstoffsystems mit nur einem Leitungsbündel anzusteuern, insgesamt also besonders kostengünstig.

Bei einer fünften vorteilhaften Weiterbildung des erfindungsgemäßen Brennstoffsystems ist in der Zuführungsleitung zwischen dem brennernahen Einspeisepunkt und dem Brenner ein Stellorgan vorgesehen. Dieses Stellorgan verhindert sicher ein Austreten von Brennstoff während des zweiten Verfahrensschritts.

Nachfolgend wird ein Ausführungsbeispiel der erfindungsgemäßen Lösung anhand der beigefügten schematischen Zeichnungen näher erläutert. Es zeigt:

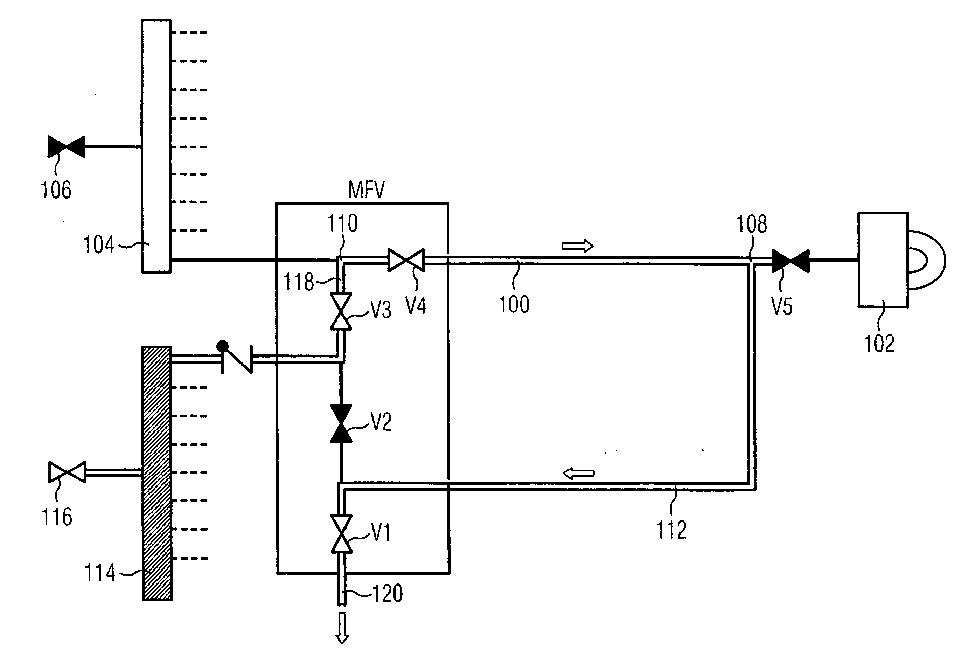

- FIG 1: eine Prinzipskizze eines Ausführungsbeispiels eines Brennstoffsystems einer Gasturbine gemäß der Erfindung.

In FIG 1 ist ein erfindungsgemäßes Brennstoffsystem dargestellt, bei dem von einer (nicht dargestellten) Brennstoffquelle ausgehend flüssiger Brennstoff in Form von Heizöl durch ein Ventil 106, einen Heizöl-Flussteiler 104 und eine Zuführungsleitung 100 in einen (von mehreren) Brenner(n) 102 gefördert werden kann. In der Zuführungsleitung 100 sind ein brennernaher Einspeisepunkt 108 und ein brennerferner Einspeisepunkt 110 ausgebildet. Zu dem brennernahen Einspeisepunkt 108 führt eine erste Einspeiseleitung 112, durch die durch ein Ventil V2, einen Wasser-Verteiler 114 und ein Stellventil 116 aus einer (nicht dargestellten) NOx-Wasserversorgung als Wasserquelle Wasser als Spülmedium für die Zuführungsleitung 100 und den Brenner 102 zur Verfügung gestellt werden kann.

Von dem Wasser-Verteiler 114 führt eine zweite Einspeiseleitung 118 mit einem darin angeordneten Ventil V3 zu dem zweiten Einspeisepunkt 110. Ferner ist in dem Leitungsabschnitt der Zuführungsleitung 100 zwischen dem ersten und dem zweiten Einspeisepunkt 108 bzw. 110 ein Ventil V4 angeordnet. Schließlich führt von der ersten Einspeiseleitung 112 in Strömungsrichtung hinter dem Ventil V2 eine Drainageleitung 120 mit einem darin angeordneten Ventil V1 zu einer weiter nicht dargestellten Drainage. Die Ventile V1, V2, V3 und V4 sind in einem Mehrfunktionsventil MFV zu einer baulichen Einheit zusammengefasst.

Im Leitungsabschnitt der Zuführungsleitung 100 zwischen dem Einspeisepunkt 108 und dem Brenner 102 befindet sich ein Sperrorgan in Form eines Ventils V5.

Zum Spülen der Leitungen des derartigen Brennstoffsystems einer Gasturbine, d.h. der Zuführungsleitung 100, geschieht das Entleeren der Heizölleitungen in zwei Schritten: Zunächst werden die Brenner 102 mit einem Medium, nämlich Wasser, gespült. Dazu wird Wasser aus der NOx-Wasserversorgung über die Wasserleitung bzw. Einspeiseleitung 112 und das brennernahe T-Stück (brennernaher Einspeisepunkt) 108 in die Brennkammer bzw. den Brenner 102 gedrückt (Ventil V2 offen; V1, V3 und V4 zu). Dadurch wird der Brenner 102 und das Leitungsstück zwischen T-Stück 108 und Brenner 102 (das typischerweise kürzer als 1 m (Meter) ist) von Heizöl entleert.

Im zweiten Schritt wird Wasser über das Mehrfunktionsventil MFV bzw. den brennerfernen Einspeisepunkt 110 aus dem Heizöl-Wassereinspritzpackage (Sperrorgan 116 und Wasser-Verteiler 114) in die Heizölleitung bzw. Zuführungsleitung 100 geführt (V2 zu; V1, V3 und V4 offen). Das Wasser drückt das Heizöl vorwärts Richtung Brenner 102. Dort wird es aber nicht in die Brenner 102 eingespritzt (dies würde zu unerwünschten Nachbrenneffekten führen), sondern über das T-Stück 108 rückwärts in die Wasserleitung bzw. Einspeiseleitung 112 gedrückt, wobei die Brennerzuführung zu diesem Zeitpunkt durch das Ventil V5 (als geeignete Armatur) verschlossen ist.

Nahe der Heizölversorgung (auf dem Heizöl-Wassereinspritzpackage) wird das Heizöl dann über das Ventil V1 durch die Drainageleitung 120 in eine Entleerung bzw. die Drainage verbracht.

Die Erfindung erlaubt ein vollständiges Spülen der Heizölleitungen bzw. Zuführungsleitungen 100 in der normalen Heizöl-Strömungsrichtung.

Weitere Vorteile sind ein sicheres Entfernen des Heizöls aus den Heizölleitungen auch bei geringem oder fehlendem Brennkammerdruck, sowie kürzere Spülzeiten durch höheren Spülfluss.

## Patentansprüche

1. Verfahren zum Spülen eines Abschnitts eines Brennstoffsystems eines Brenners einer Gasturbine mit den Schritten:
Vorsehen einer Zuführungsleitung (100) zum Zuführen von Brennstoff von einer Brennstoffquelle zu dem Brenner (102), Vorsehen eines brennernahen Einspeisepunkts (108) zum Einspeisen von Medium in die Zuführungsleitung (100) über eine erste Einspeiseleitung (112) und
Vorsehen eines brennerferner Einspeisepunkts (110) zum Einspeisen von Medium in die Zuführungsleitung (100) über eine zweite Einspeiseleitung (118),
Einspeisen von Medium über den brennernahen Einspeisepunkt (108) und Abführen des in der Zuführungsleitung (100) zwischen dem brennernahen Einspeisepunkt (108) und dem Brenner (102) befindlichen Brennstoffs über den Brenner (102), **gekennzeichnet durch**
das Einspeisen von Medium über den brennerfernen Einspeisepunkt (110) und Abführen des in der Zuführungsleitung (100) zwischen dem brennerfernen (110) und dem brennernahen Einspeispunkt (108) befindlichen Brennstoffs über den brennernahen Einspeisepunkt (108) in die erste Einspeiseleitung (112).

2. Verfahren nach Anspruch 1,
bei dem der Verfahrensschritt des Einspeisens von Medium über den brennerfernen Einspeisepunkt (110) nach dem Verfahrensschritt des Einspeisens von Medium über den brennernahen Einspeisepunkt (108) durchgeführt wird.

3. Verfahren nach Anspruch 1 oder 2,
bei dem der in der Zuführungsleitung (100) zwischen dem brennerfernen und dem brennernahen Einspeisepunkt (110; 108) befindliche Brennstoff über den brennernahen Einspeispunkt (108) in eine Drainageleitung (120) abgeführt wird.

4. Verfahren nach einem der Ansprüche 1 bis 3, bei dem als Medium Wasser verwendet wird.

5. Brennstoffsystem eines Brenners (102) einer Gasturbine mit einer Zuführungsleitung (100) zum Zuführen von Brennstoff von einer Brennstoffquelle zu dem Brenner (102), in der ein brennernaher Einspeisepunkt (108) und ein brennerferner Einspeisepunkt (110) jeweils zum Einspeisen von Medium in die Zuführungsleitung (100) vorgesehen sind, **dadurch gekennzeichnet, dass**
in der Zuführungsleitung (100) zwischen dem brennernahen Einspeisepunkt (108) und dem Brenner (102) ein Stellorgan (V5) vorgesehen ist.

6. Brennstoffsystem nach Anspruch 5,
bei dem eine erste Einspeiseleitung (112) zum brennernahen Einspeisepunkt (108) geführt ist, eine zweite Einspeiseleitung (118) zum brennerfernen Einspeisepunkte (110) geführt ist und in den Einspeiseleitungen (112; 118) jeweils stromauf der beiden Einspeisepunkte ein Stellorgan (V2, V3) zum Einstellen des Durchflusses zu den jeweiligen Einspeisepunkten (108; 110) vorgesehen ist.

7. Brennstoffsystem nach Anspruch 6,
bei dem von der ersten Einspeiseleitung (112) zwischen dem brennernahen Einspeisepunkt (108) und dem stromauf davon angeordnetem Stellorgan (V2) eine Abführleitung (120) mit einem darin angeordneten Stellorgan (V1) abgezweigt ist.

8. Brennstoffsystem nach einem der Ansprüche 5 bis 7,
bei dem in der Zuführungsleitung (100) zwischen dem brennerfernen Einspeisepunkt (110) und dem brennernahen Einspeisepunkt (108) ein Stellorgan (V4) vorgesehen ist.

9. Brennstoffsystem nach einem der Ansprüche 6 bis 8,
bei dem die genannten Stellorgane (V1; V2; V3; V4) als Multifunktions-Stellorgan zu einer baulichen Einheit zusammengefasst sind.

## Claims

1. Method for flushing a section of a fuel system of a burner of a gas turbine with the steps:
providing a feed line (100) for feeding fuel from a fuel source to the burner (102), providing a feed point (108) which is close to the burner for feeding medium into the feed line (100) via a first feed line (112), and
providing a feed point (110) which is remote from the burner in the feed line (100) for feeding medium into the feed line (100) via a second feed line (118),
feeding medium via the feed point (108) which is close to the burner, and discharging, via the burner (102), the fuel which is in the feed line (100) between the feed point (108) which is close to the burner and the burner (102),
**characterized by**
the feeding of medium via the feed point (110) which is remote from the burner, and discharging, via the feed point (108) which is close to the burner, of the fuel which is in the feed line (100) between the feed point (110) which is remote from the burner and the feed point (108) which is close to the burner into the first feed line (112).

2. Method according to Claim 1,
in which the method step of feeding medium via the feed point (110) which is remote from the burner is carried out after the method step of feeding medium via the feed point (108) which is close to the burner.

3. Method according to Claim 1 or 2,
in which the fuel which is in the feed line (100) between the feed point (110) which is remote from the burner and the feed point (108) which is close to the burner is discharged via the feed point (108) which is close to the burner into a drainage line (120).

4. Method according to one of Claims 1 to 3,
in which water is used as the medium.

5. Fuel system of a burner (102) of a gas turbine with a feed line (100) for feeding fuel from a fuel source to the burner (102), in which a feed point (108) which is close to the burner and a feed point (110) which is remote from the burner are provided in each case for feeding medium into the feed line (100),
**characterized in that** a control element (V5) is provided in the feed line (100) between the feed point (108) which is close to the burner and the burner (102).

6. Fuel system according to Claim 5,
in which a first feed line (112) is led to the feed point (108) which is close to the burner, a second feed line (118) is led to the feed point (110) which is remote from the burner, and a control element (V2, V3) is provided in each case in the feed lines (112; 118) upstream of the two feed points for adjusting the throughflow to the respective feed points (108; 110).

7. Fuel system according to Claim 6,
in which a discharge line (120), with a control element (V1) arranged therein, is branched off from the first feed line (112) between the feed point (108) which is close to the burner and the control element (V2) which is arranged upstream of it.

8. The fuel system according to one of claims 5 to 7,
in which a control element (V4) is provided in the feed line (100) between the feed point (110) which is remote from the burner and the feed point (108) which is close to the burner.

9. The fuel system according to one of claims 6 to 8,
in which the said control elements (V1; V2; V3; V4) are grouped together as a multifunction control element, forming a constructional module.

## Revendications

1. Procédé de rinçage d'un tronçon d'un système d'alimentation en un combustible d'un brûleur d'une turbine à gaz, comprenant les stades dans lesquels :
on prévoit un conduit d'apport ( 100 ), pour apporter du combustible d'une source de combustible au brûleur ( 102 ), on prévoit un point ( 108 ) d'injection proche du brûleur, pour injecter du fluide dans le conduit ( 100 ) d'apport par un premier conduit ( 112 ) d'injection, et
on prévoit un point ( 110 ) d'injection éloigné du brûleur, pour injecter du fluide dans le conduit ( 100 ) d'apport par un deuxième conduit ( 118 ) d'injection,
on injecte du fluide par le point ( 108 ) d'injection proche du brûleur et on évacue le combustible se trouvant dans le conduit ( 100 ) d'apport entre le point ( 108 ) d'injection proche du brûleur et le brûleur ( 102 ) par le brûleur ( 102 ),
**caractérisé par**
l'injection de fluide par le point ( 110 ) d'injection éloigné du brûleur et l'évacuation du combustible se trouvant dans le conduit ( 100 ) d'apport entre le point ( 110 ) d'injection éloigné du brûleur et le point ( 108 ) d'injection proche du brûleur par le point ( 108 ) d'injection proche du brûleur dans le premier conduit ( 112 ) d'injection.

2. Procédé suivant la revendication 1,
dans lequel on effectue le stade du procédé de l'injection de fluide par le point ( 110 ) d'injection éloigné du brûleur après le stade du procédé de l'injection de fluide par le point ( 108 ) d'injection proche du brûleur.

3. Procédé suivant la revendication 1 ou 2,
dans lequel on évacue, par le point ( 108 ) d'injection proche du brûleur dans un conduit ( 120 ) de drainage, le combustible se trouvant dans le conduit ( 100 ) d'apport entre le point ( 100 ) d'injection éloigné du brûleur et le point ( 108 ) d'injection proche du brûleur.

4. Procédé suivant l'une des revendications 1 à 3,
dans lequel on utilise de l'eau comme fluide.

5. Système d'alimentation en combustible d'un brûleur ( 102 ) d'une turbine à gaz, comprenant un conduit ( 100 ) d'apport pour l'apport de combustible d'une source de combustible au brûleur ( 102 ), dans lequel il est prévu un point ( 108 ) d'injection proche du brûleur et un point ( 110 ) d'injection éloigné du brûleur respectivement pour l'injection de fluide dans le conduit ( 100 ) d'apport,
**caractérisé en ce que**
il est prévu dans le conduit ( 100 ) d'apport un organe ( V5 ) de réglage entre le point ( 108 ) d'injection proche du brûleur et le brûleur ( 102 ).

6. Système d'alimentation en combustible suivant la revendication 5,
dans lequel un premier conduit ( 112 ) d'injection va au point ( 108 ) d'injection proche du brûleur, un deuxième conduit ( 118 ) d'injection va au point ( 110 ) d'injection éloigné du brûleur et il est prévu dans les conduits ( 112, 118 ) d'injection, respectivement en amont des deux points d'injection, un organe ( V2, V3 ) de réglage pour le réglage du débit allant aux points ( 108, 110 ) d'injection respectifs.

7. Système d'alimentation en combustible suivant la revendication 6,
un conduit ( 120 ) d'évacuation ayant un organe ( V1 ) de réglage qui y est monté bifurque du premier conduit ( 112 ) d'injection entre le point ( 108 ) d'injection proche du brûleur et l'organe ( V2 ) de réglage monté en amont de celui-ci.

8. Système d'alimentation en combustible suivant l'une des revendications 5 à 7,
dans lequel un organe ( V4 ) de réglage est prévu dans le conduit ( 100 ) d'apport entre le point ( 110 ) d'injection éloigné du brûleur et le point ( 108 ) d'injection proche du brûleur.

9. Système d'alimentation en combustible suivant l'une des revendications 6 à 8,
dans lequel les organes ( V1, V2, V3, V4 ) de réglage mentionnés sont rassemblés sous la forme d'un organe de réglage multifonction en une unité de construction.
